# EUROPEAN PATENT SPECIFICATION

(11) **EP 1 905 582 B1**
(45) Date of publication and mention of the grant of the patent: **07.03.2012**
(21) Application number: 07018800.8
(22) Date of filing: 25.09.2007
(51) Int. Cl.: B32B 27/00

(54) **Draw-forming laminated sheet and draw-formed container using the same**
Zuggeformtes beschichtetes Blech und zuggeformter Behälter daraus
Feuille stratifiée formable par étirage et récipient formé par étirage l'utilisant.

(30) Priority: 26.09.2006 JP 2006260187
(43) Date of publication of application: 02.04.2008
(73) Proprietor: Toppan Printing Co., Ltd., Taito-ku, Tokyo 110-0016 (JP)
(72) Inventor: Kashimura, Masayuki, Omitama-shi Ibaraki 311-3436 (JP); Kawaguchi, Katsumi, Omitama-shi Ibaraki 311-3436 (JP)
(74) Representative: HOFFMANN EITLE

(56) References cited:
- EP-A- 1 086 981
- EP-A- 1 671 784

## Description

### BACKGROUND OF THE INVENTION

### Field of the Invention

The present invention relates to a draw-forming laminated sheet and a draw-formed container using the draw-forming laminated sheet.

### Related Background Art

Conventionally, as a polymer with a gas-barrier property, a polymer represented by an ethylene-vinyl alcohol copolymer has been used. The polymer contains, within the molecule thereof, a group which is highly hydrophilic, and which readily forms a hydrogen bond. Nevertheless, such polymers have an excellent barrier property against gas such as oxygen under a dry condition. In contrast, under a high humidity condition, the polymers have a poor barrier property against gas such as oxygen due to the hydrophilicity thereof. For this reason, there is a problem in these polymers when used as a material for a packaging container, for example, a draw-formed container, on which a sterilization treatment such as a boiling or retort treatment needs to be performed. At this time, it takes a long time to recover the gas-barrier property after the sterilization treatment.

To solve the problem, for example, International Publication No. W02005/032813 discloses a stretched-formed multilayer container formed by stretching a multilayer sheet or multilayer preform within an areal stretch ratio from 1.1 times to 100 times, the multilayer sheet or multilayer preform containing at least one layer formed from a mixture of a polycarboxylic acid-based polymer and a plasticizer and at least one layer formed from a mixture of a polyvalent metal compound and a resin.

Moreover, Japanese Unexamined Patent Application Publication No. 2005-125574 discloses a stretched laminate film which includes a layer (a) formed from a composition of a polycarboxylic acid-based polymer and a plasticizer, a layer (c) containing a polyvalent metal compound and a layer (b) formed from a thermoplastic resin, in which the laminate includes at least one layer forming unit where the layer (a) and the layer (c) are adjacent to each other, and in which at least the layer (a) and the layer (b) are stretched with a surface stretch ratio of 1.1 to 100.

EP 1 086 981 A1 discloses a gas-barrier film which is produced by applying a layer containing metallic compound onto a surface of a polymer layer. The polymer layer is produced from a mixture of a polyalcohol and at least one poly(meth)acrylic acid polymer. The layer including the metallic compound is adjacent to the layer including the polyalcohol and the poly(meth)acrylic acid polymer.

EP 1 671 784 A1 discloses a stretched-formed multilayer container. This is formed by stretching a multilayer sheet or multilayer preform which contains (i) a layer made of a mixture of a polycarboxylic acid-based polymer and a plasticizer and (ii) a layer made of a mixture of a multivalent metal compound and a resin. These layers are adjacent to one another.

However, the above-described stretched-formed multilayer container and stretched laminate film have a problem that the container with a sufficient gas-barrier property cannot be manufactured when the multilayer sheet or the like is stored for a long period of time and thereafter draw-formed. Accordingly, it is necessary to draw-form the multilayer sheet soon after the production of the sheet in order to manufacture a draw-formed container with an excellent gas-barrier property even under a high humidity atmosphere.

### SUMMARY OF THE INVENTION

The present invention is made in consideration of the problems of the prior art. An object of the present invention is to provide a draw-forming laminated sheet which can be formed into a draw-formed container with an excellent gas-barrier property even under a high humidity atmosphere, and also which can be stored for an extended period of time before the draw-forming, as well as to provide a draw-formed container using the draw-forming laminated sheet.

The present inventors have devoted themselves to keen studies so as to achieve the above object. As a result, the present inventors have discovered the following facts, and then completed the present invention. The draw-forming laminated sheet according to the present invention includes: a nonoriented supporting material; a gas-barrier multilayer film precursor, which is layered on at least one surface of the supporting material with an anchor coat layer interposed in between; and a layer formed from a thermoplastic resin, which is disposed on the surface of the gas-barrier multilayer film precursor. The draw-forming laminated sheet can be stored for an extended period of time before the draw-forming by providing a specific layer between a layer containing a polycarboxylic acid-based polymer and a layer containing a polyvalent metal compound. Moreover, by performing a high temperature-high humidity treatment on the container which is draw-formed from the draw-forming laminated sheet, it is possible to obtain the draw-formed container with an excellent gas-barrier property even under a high humidity atmosphere.

Specifically, a draw-forming laminated sheet according to the present invention includes: a nonoriented supporting material; a gas-barrier layer precursor, which is layered on at least one surface of the supporting material with an anchor coat layer interposed in between; and a layer formed from a thermoplastic resin, which is disposed on the surface of the gas-barrier layer precursor. The gas-barrier layer precursor includes: a layer (A) formed from a mixture of a polycarboxylic acid-based polymer and a plasticizer; a layer (B) formed from a mixture of a polyvalent metal compound and a binder resin; and a layer (C) formed from an ionization-control resin (resin which controls translation of metal ions), and having a thickness of 0.01 µm to 1 µm. The layer (A) and the layer (B) are layered with the layer (C) interposed in between.

Moreover, in the draw-forming laminated sheet according to the present invention, the ionization-control resin is preferably at least one resin selected from the group consisting of a polyester-based resin, a polyether-based resin, an epoxy-based resin, an acrylic-based resin and a polyethyleneimine-based resin.

Furthermore, in the draw-forming laminated sheet according to the present invention, the ionization-control resin is preferably a resin having a urethane bond.

Additionally, in the draw-forming laminated sheet according to the present invention, the ionization-control resin may be the same as the resin which forms the anchor coat layer.

Furthermore, in the draw-forming laminated sheet according to the present invention, the ionization-control resin may be the same as the binder resin which forms the layer (B).

Moreover, in the draw-forming laminated sheet according to the present invention, the ionization-control resin may be the same as the resin which forms the anchor coat layer and as the binder resin which forms the layer (B).

Furthermore, in the draw-forming laminated sheet according to the present invention, the mass ratio of the polyvalent metal compound to the binder resin (polyvalent metal compound/binder resin) is preferably within a range of 65/35 to 92/8.

Additionally, in the draw-forming laminated sheet according to the present invention, the polyvalent metal compound is preferably a divalent metal compound.

A draw-formed container according to the present invention is draw-formed from the above-described draw-forming laminated sheet.

In addition, a draw-formed container with a gas-barrier property according to the present invention is formed by performing a high temperature-high humidity treatment on a draw-formed container, which is draw-formed from the above-described draw-forming laminated sheet, so as to transfer polyvalent metal ions in the layer (B) to the layer (A) via the layer (C), and thus to form ionic bonds between the polyvalent metal ions and carboxyl groups of the polycarboxylic acid-based polymer.

Furthermore, in the draw-formed container with a gas-barrier property according to the present invention, the oxygen permeability at a temperature of 20°C and a relative humidity of 80% is preferably 100 cm³ (STP)/(m²·day·MPa)or less.

In a method of manufacturing a draw-formed container with a gas-barrier property according to the present invention, a draw-formed container, which is draw-formed from the above-described draw-forming laminated sheet, is exposed to a high temperature-high humidity atmosphere at a temperature of 80°C or more and a relative humidity of 90% or more for 10 minutes or longer so that the oxygen permeability of the draw-formed container at a temperature of 20°C and a relative humidity of 80% can be 100 cm³(STP)/(m²·day·MPa) or less.

Note that, in the present invention, the reasons why it is possible to obtain a draw-forming laminated sheet which can be formed into a draw-formed container with an excellent gas-barrier property even under a high humidity atmosphere, and also which can be stored for an extended period of time before the draw-forming, are not exactly known. However, the present inventors estimate the reasons as follows. Specifically, in a gas-barrier layer precursor including a layer (A) formed from a mixture of a polycarboxylic acid-based polymer and a plasticizer, and a layer (B) formed from a mixture of a polyvalent metal compound and a binder resin, polyvalent metal ions in the layer (B) are transferred to the layer (A), and thereby ionic bonds are formed between the polyvalent metal ions and carboxyl groups of the polycarboxylic acid-based polymer (ionic bond reaction). Thus, the gas-barrier layer precursor is formed into a gas-barrier layer with an excellent gas-barrier property. When the layer (A) and the layer (B) are adjacent to each other, such an ionic bond reaction progresses even in normal temperature. As the ionic bond reaction progresses, the stretchability of the gas-barrier layer precursor is reduced. Accordingly, when the laminated sheet is stored for a long period of time and then draw-formed, a crack occurs in the gas-barrier layer precursor at the time of draw-forming. As a result, a draw-formed container with a sufficient gas-barrier property cannot be obtained.

On the other hand, in the draw-forming laminated sheet according to the present invention, the above-described layer (A) and layer (B) are layered with a layer (C) interposed in between. The layer (C) is formed from an ionization-control resin, and has a thickness of 0.01 µm to 1 µm. The layer (C) can inhibit the polyvalent metal ions in the layer (B) from being transferred to the layer (A), and thereby the progress of the ionic bond reaction is inhibited. For this reason, the draw-forming laminated sheet according to the present invention can be stored for an extended period of time before the draw-forming. Moreover, when a high temperature-high humidity treatment such as a retort treatment is performed on the draw-forming laminated sheet according to the present invention, the polyvalent metal ions in the layer (B) are readily transferred into the resin, and allowed to be transferred to the layer (A) via the layer (C). In the draw-forming laminated sheet according to the present invention, the ionic bond reaction progresses by means of the high temperature-high humidity treatment as described above. Thereby, it is possible to form the draw-formed container with an excellent gas-barrier property even under a high humidity atmosphere.

The present invention makes it possible to provide a draw-forming laminated sheet which can be formed into a draw-formed container with an excellent gas-barrier property even under a high humidity atmosphere. Moreover, the draw-forming laminated sheet can be stored for an extended period of time before the draw-forming as well as to provide a draw-formed container using the draw-forming laminated sheet.

### DETAILED DESCRIPTION OF THE PREFERRED EMBODIMENTS

Hereinafter, description will be given of the present invention in detail in line with preferred embodiments thereof.

Firstly, description will be given of a laminated sheet for draw-forming according to the present invention. Specifically, the draw-forming laminated sheet according to the present invention includes: a nonoriented supporting material; a gas-barrier layer precursor, which is layered on at least one surface of the supporting material with an anchor coat layer interposed in between; and a layer formed from a thermoplastic resin, which is disposed on the surface of the gas-barrier layer precursor.

The gas-barrier layer precursor includes: a layer (A) formed from a mixture of a polycarboxylic acid-based polymer and a plasticizer; a layer (B) formed from a mixture of a polyvalent metal compound and a binder resin; and a layer (C) which is formed from an ionization-control resin, and which has a thickness of 0.01 µm to 1 µm. The layer (A) and the layer (B) are layered with the layer (C) interposed in between.

### <Supporting material>

The supporting material according to the present invention is nonoriented, and is a support for sequentially layering the later-described anchor coat layer, the gas-barrier layer precursor and the layer formed from the thermoplastic resin.

The material which can be used as the supporting material includes, but not limited to: a polyolefin-based polymer such as low-density polyethylene, high-density polyethylene, linear low-density polyethylene, polypropylene, poly-4-methylpentene and cyclic polyolefin, a copolymer thereof and an acid modified product of the polymer and the copolymer; a vinyl acetate-based copolymer such as polyvinyl acetate, an ethylene-vinyl acetate copolymer, a saponification product of an ethylene-vinyl acetate copolymer, and polyvinyl alcohol; a polyester-based polymer such as polyethylene terephthalate, polybutylene terephthalate and polyethylene naphthalate, poly-ε-caprolactone, polyhydroxybutyrate and polyhydroxyvalerate, and a copolymer thereof; a polyamide-based polymer such as nylon 6, nylon 66, nylon 12, a nylon 6/66 copolymer, a nylon 6/12 copolymer and a metaxylene adipamide/nylon 6 copolymer, and a copolymer thereof; a polyether-based polymer such as polyethylene glycol, polyethersulfone, polyphenylene sulfide and polyphenylene oxide; a chlorine-containing or fluorine-containing polymer such as polyvinyl chloride, polyvinylidene chloride, polyvinyl fluoride and polyvinylidene fluoride, and a copolymer thereof; an acrylic-based polymer such as polymethyl acrylate, polyethyl acrylate, polymethyl methacrylate, polyethyl methacrylate and polyacrylonitrile, and a copolymer thereof; a polyimide-based polymer and a copolymer thereof; a coating resin such as an alkyd resin, a melamine resin, an acrylic resin, nitrocellulose, a urethane resin, a polyester resin, a phenol resin, an amino resin, a fluorine resin and an epoxy resin; and a natural high-molecular compound such as cellulose, starch, pullulan, chitin, chitosan, glucomannan, agarose and gelatin. Above all, a polyester-based polymer, a polyamide-based polymer and a polyolefin-based polymer are preferable from the viewpoint of the usage as a packaging material.

Moreover, the supporting material can be used in the form of, for example, a nonoriented sheet and nonoriented film, but the form is not particularly limited to these. Furthermore, the thickness of the supporting material is not particularly limited, but preferably within a range of 5 µm to 500 µm, and more preferably within a range of 10 µm to 300 µm. When the thickness of the supporting material is less than the lower limit, a problem tends to occur at the time of coating that the supporting material is likely to be broken. In contrast, when the thickness exceeds the upper limit, the rigidity of the supporting material becomes too high, and thereby a problem tends to occur at the time of handling the secondary processing or filling contents therein.

The supporting material may be produced by forming a thin film made of an inorganic compound such as silicon oxide, aluminium oxide, aluminium, and silicon nitride on the surface of sheet, film, or the like by use of a vacuum evaporation method, a sputtering method or an ion plating method.

### <Anchor coat layer>

The anchor coat layer according to the present invention is formed to increase the interlayer adhesion between the supporting material and the gas-barrier layer precursor to be described below. The anchor coat layer is formed on at least one surface of the supporting material, and contains an anchor coat agent.

The anchor coat agent includes, for example, a polyester-based polyurethane resin and a polyether-based polyurethane resin. Among these anchor coat agents, a polyester-based polyurethane resin is preferable from the viewpoint of the heat resistance and an intensity of the interlayer adhesion.

The thickness of the anchor coat layer is not particularly limited, but preferably within a range of 0.01 µm to 5 µm, more preferably within a range of 0.03 µm to 3 µm, and particularly preferably within a range of 0.05 µm to 2 µm. When the thickness of the anchor coat layer is less than the lower limit, the interlayer adhesion tends to be insufficient. In contrast, when the thickness exceeds the upper limit, a desired gas-barrier property tends not to appear.

### <Gas-barrier layer precursor>

The gas-barrier layer precursor according to the present invention is a laminated sheet including: the layer (A) formed from the mixture of the polycarboxylic acid-based polymer and the plasticizer; the layer (B) formed from the mixture of the polyvalent metal compound and the binder resin; and the layer (C) which is formed from the ionization-control resin, and which has a thickness of 0.01 µm to 1 µm. The gas-barrier layer precursor is layered on at least one surface of the supporting material with the anchor coat layer interposed in between.

(Layer (A) formed from mixture of polycarboxylic acid-based polymer and plasticizer)

The layer (A) according to the present invention is formed from the mixture of the polycarboxylic acid-based polymer and the plasticizer. The polycarboxylic acid-based polymer according to the present invention is a polymer of polycarboxylic acid-based polymerizable monomers, and contains two or more carboxyl groups in the molecule thereof. Specifically, examples of the polymerizable monomer can include a homopolymer of an α,β-monoethylenically unsaturated carboxylic acid, a copolymer of the at least two kinds thereof, a copolymer of an α,β-monoethylenically unsaturated carboxylic acid and another ethylenically unsaturated monomer, and an acidic polysaccharide such as alginic acid, carboxymethylcellulose and pectin, which includes a carboxyl group in the molecules. These polycarboxylic acid-based polymerizable monomers may be used alone or in mixture of two or more kinds.

Here, the α,β-monoethylenically unsaturated carboxylic acid is typically acrylic acid, methacrylic acid, itaconic acid, maleic acid, fumaric acid, crotonic acid and the like. In addition, an ethylenically unsaturated monomer that can be copolymerized with these acids includes ethylene, propylene, a vinyl ester of saturated carboxylic acid such as vinyl acetate, alkyl acrylates, alkyl methacrylates, alkyl itaconates, acrylonitrile, vinyl chloride, vinylidene chloride, vinyl fluoride, vinylidene fluoride, styrene and the like. Moreover, when the polycarboxylic acid-based polymer is a copolymer of an α,β-monoethylenically unsaturated carboxylic acid and a vinyl ester of saturated carboxylic acid such as vinyl acetate, the copolymer may be further saponified to convert a part of the vinyl ester of saturated carboxylic acid into vinyl alcohol before use.

In addition, when the polycarboxylic acid-based polymer according to the present invention is a copolymer formed from an α,β-monoethylenically unsaturated carboxylic acid and the other ethylenically unsaturated monomer, it is preferable that the compositional proportion of the α,β-monoethylenically unsaturated carboxylic acid monomer in the copolymer composition be 60 mol% or more, more preferably 80 mol% or more, further preferably 90 mol% or more, and most preferably 100 mol%, from the viewpoint of the improvements in the gas-barrier property and the resistance against high-temperature water vapor and hot water of a gas-barrier layer to be obtained. In other words, it is preferable to use the polymer formed from only the α,β-monoethylenically unsaturated carboxylic acid as the polycarboxylic acid-based polymer according to the present invention. Furthermore, when these polycarboxylic acid-based polymers are formed from only the α,β-monoethylenically unsaturated carboxylic acid, the preferable specific examples are a polymer formed by the polymerization of at least one kind of polymerizable monomers selected from the group consisting of acrylic acid, methacrylic acid, itaconic acid, maleic acid, fumaric acid and crotonic acid, as well as a mixture thereof. Among the polymers formed from only the α,β-monoethylenically unsaturated carboxylic acid, it is more preferable to use a polymer obtained by the polymerization of at least one kind of polymerizable monomers selected from acrylic acid, methacrylic acid and maleic acid, or a mixture thereof. It is most preferable to use polyacrylic acid, polymethacrylic acid and polymaleic acid, or a mixture thereof. Meanwhile, when the polycarboxylic acid-based polymer is other than a polymer formed from the α,β-monoethylenically unsaturated carboxylic acid monomers, such as an acidic polysaccharide, alginic acid can be used preferably.

Moreover, the polycarboxylic acid-based polymer according to the present invention may be partially neutralized with monovalent and/or divalent metal compounds. The metal in such metal compounds includes sodium, calcium, zinc and the like. The metal compound includes sodium hydroxide, calcium hydroxide, calcium oxide, zinc oxide, and the like. The amount of these metal compounds to be added is not particularly limited as long as the stretch-formability (stretch-formability at the time of draw-forming) is not deteriorated due to the added amount. However, the amount is preferably the chemical equivalent of 0.3 or less relative to the content of the carboxyl groups of the polycarboxylic acid-based polymer.

Furthermore, the number average molecular weight of the polycarboxylic acid-based polymer is preferably, but not particularly limited to, 2,000 to 10,000,000 and further preferably 5,000 to 1,000,000 from the viewpoint of the formability of organic thin film.

The plasticizer according to the present invention can be appropriately selected from known plasticizers for use. The plasticizer can include glycols such as ethylene glycol, trimethylene glycol, propylene glycol, tetramethylene glycol, 1,3-butanediol, 2,3-butanediol, pentamethylene glycol, hexamethylene glycol, diethylene glycol, triethylene glycol, polyethylene glycol, polyethylene oxide; sorbitol, mannitol, dulcitol, erythritol, glycerin, lactic acid, fatty acids, and the like. Above all, glycerin, ethylene glycol, polyethylene glycol and the like are more preferable from viewpoints of the stretchability of a laminated sheet to be obtained and the gas-barrier property of a draw-formed container to be obtained. These plasticizers may be used alone or in mixture of two or more kinds.

In the layer (A) according to the present invention, the mass ratio of the polycarboxylic acid-based polymer to the plasticizer (polycarboxylic acid-based polymer/plasticizer) is preferably 99.9/0.1 to 70/30, more preferably 99/1 to 80/20, and particularly preferably 95/5 to 85/15. When the mass ratio is within these ranges, it is possible to provide both the stretch-formability of a laminated sheet to be obtained and the gas-barrier property of a draw-formed container to be obtained. In other words, it is possible to provide the stabilized gas-barrier property by forming the ionic bonds between the polyvalent metal ions in the layer (B) to be described below and the polycarboxylic acid-based polymer in the layer (A). Moreover, the existence of the plasticizer in the layer (A) allows the layer (A) to follow the stretch of the supporting material or the layer formed from the thermoplastic resin, and further the existence helps the stretches of the layers (B) and (C) to be described below. In addition to the polycarboxylic acid-based polymer and the plasticizer, the layer (A) according to the present invention may contain an any known additive with an amount not to impair the properties described above.

Furthermore, the thickness of the layer (A) is preferably within a range of 0.01 µm to 20 µm, more preferably within a range of 0.05 µm to 10 µm, and particularly preferably within a range of 0.1 µm to 5 µm. When the thickness of the layer (A) is less than the lower limit, the layer tends to be formed in difficulty. In contrast, when the thickness exceeds the upper limit, the ionic bond reaction with the polyvalent metal ions hardly progresses uniformly in the thickness direction, and thereby the gas-barrier property of a draw-formed container to be obtained tends to be insufficient.

### (Layer (B) formed from mixture of polyvalent metal compound and binder resin)

The layer (B) according to the present invention is formed from the mixture of the polyvalent metal compound and the binder resin. The polyvalent metal compound according to the present invention is provided to form the ionic bond with the polycarboxylic acid-based polymer. The metal in the polyvalent metal compound can include, for example, an alkaline earth metal such as beryllium, magnesium and calcium; a transition metal such as titanium, zirconium, chromium, manganese, iron, cobalt, nickel, copper and zinc; and aluminum.

Examples of the polyvalent metal compound include an oxide, a hydroxide, an organic acid salt and an inorganic acid salt of the aforementioned metal; an ammonium complex of the metal; a secondary to quaternary amine complex of the metal; an organic acid salt and inorganic acid salt of such complexes; an alkyl alkoxide, and the like. The organic acid salt includes acetate, oxalate, citrate, lactate, stearate, monoethylenically unsaturated carboxylate, and the like. The inorganic acid salt includes chloride, sulfate, nitrate, carbonate, inorganic phosphate, phosphite, hypophosphite, and the like.

The polyvalent metal compound may be used alone or in mixture of two or more kinds. Among the polyvalent metal compounds, a divalent metal compound is preferably used from the viewpoint of the improvement in the gas-barrier property, moisture proofness and manufacture performance of a draw-formed container to be obtained. Furthermore, among the polyvalent metal compounds, it is preferable to use an oxide, a hydroxide and a carbonate of an alkaline earth metal, zirconium, cobalt, nickel, copper, zinc and the like; an ammonium complex of an alkaline earth metal, zirconium, cobalt, nickel, copper, zinc, and the like; or a carbonate of the complex. It is more preferable to use an oxide, a hydroxide and a carbonate of magnesium, calcium, zirconium, copper, zinc, and the like; an ammonium complex of zirconium, copper, nickel, zinc, and the like; or a carbonate of the complex.

Note that, when there exists a polyvalent metal compound which is not involved in the formation of the ionic bond in the layer (B) according to the present invention, the polyvalent metal compound is preferably in a particle form with a smaller particle size from the viewpoint of the transparency of a laminated sheet to be obtained. Meanwhile, it is preferable to use a coating solution at the time of forming the layer (B) according to the present invention, as described later. From the viewpoint of preparing the coating solution more efficiently and reliably, the polyvalent metal compound is preferably in a particle form with a smaller particle size. The average particle diameter of the polyvalent metal compound is preferably 5 µm or less, more preferably 1 µm or less, and particularly preferably 0.1 µm or less.

The binder resin according to the present invention, which can be used preferably, is for example a thermoplastic resin or a thermosetting resin, and is a resin used for coating. Specifically, the binder resin can include an alkyd resin, an amino alkyd resin, a melamine resin, an acrylic resin, nitrocellulose, a urethane resin, a polyester resin, a phenol resin, an amino resin, a fluorine resin, a silicone resin, an epoxy resin, a vinyl resin, a cellulose resin and a natural resin.

In the layer (B) according to the present invention, the mass ratio of the polyvalent metal compound to the binder resin (polyvalent metal compound/binder resin) is preferably within a range of 65/35 to 92/8, more preferably within a range of 70/30 to 92/8, particularly preferably within a range of 75/25 to 92/8, and most preferably within a range of 78/22 to 92/8. When the mass ratio is less than the lower limit, the gas-barrier property of a draw-formed container to be obtained tends to be insufficient. In contrast, when the mass ratio exceeds the upper limit, the stretch-formability of a laminated sheet to be obtained tends to be poor.

Note that, the mixture of the polyvalent metal compound and the binder resin according to the present invention may contain a hardener, if necessary, in addition to the polyvalent metal compound and a binder resin. The hardener can include a known resin such as a melamine resin, polyisocyanate and polyamine. Moreover, in addition to the hardener, the mixture of the polyvalent metal compound and the binder resin according to the present invention may contain any known additive with an amount not to impair the stretch-formability and the gas-barrier property at draw-forming.

Furthermore, the thickness of the layer (B) is preferably within a range of 0.05 µm to 50 µm, more preferably within a range of 0.1 µm to 10 µm, and particularly preferably within a range of 0.2 µm to 5 µm. When the thickness of the layer (B) is less than the lower limit, the gas-barrier property of a draw-formed container to be obtained tends to be insufficient. In contrast, when the thickness exceeds the upper limit, the stretch-formability tends to be poor.

### (Layer (C) formed from ionization-control resin)

The layer (C) according to the present invention is disposed between the layer (A) and the layer (B), and formed from the ionization-control resin. The ionization-control resin refers to a resin which can inhibit the polyvalent metal ions in the layer (B) from being transferred to the layer (A) in normal temperature. The ionization-control resin can include, for example, a polyester-based resin, a polyether-based resin, an epoxy-based resin, an acrylic-based resin and a polyethyleneimine-based resin. Above all, a polyester-based resin and a polyether-based resin are preferable from the viewpoints of the stretch-formability and of the inhibition of the polyvalent metal ions from being transferred in normal temperature.

The ionization-control resin is preferably a resin having a urethane bond from the viewpoint of an intensity of the interlayer adhesion between the layer (A) and the layer (B). The resin having a urethane bond can include for example a polyester-based polyurethane resin and a polyether-based polyurethane resin.

Furthermore, the ionization-control resin may be the same resin as that of the anchor coat agent which forms the anchor coat layer. Accordingly, the anchor coat layer and the layer (C) are allowed easily to follow the stretch of the layer (A), and thereby it is possible to improve the stretch-formability of a laminated sheet to be obtained. Additionally, the ionization-control resin may be the same as the binder resin which forms the layer (B). Accordingly, the layer (C) is allowed easily to follow the stretch of the layer (B), and thereby it is possible to improve the stretch-formability of a laminated sheet to be obtained. Specifically speaking, the ionization-control resin may be the same resin as that of the anchor coat agent which forms the anchor coat layer and also as the binder resin which forms the layer (B).

Moreover, the thickness of the layer (C) needs to be within a range of 0.01 µm to 1 µm, preferably within a range of 0.02 µm to 0.5 µm, and more preferably within a range of 0.05 µm to 0.5 µm. When the thickness of the layer (C) is less than 0.01 µm, the store-stability before draw-forming a laminated sheet to be obtained is insufficient. In contrast, when the thickness exceeds 1 µm, the gas-barrier property of a draw-formed container to be obtained is insufficient.

### (Gas-barrier layer precursor)

In the gas-barrier layer precursor according to the present invention, the layer (A) and the layer (B) need to be layered with the layer (C) interposed in between. Since the layer (A) and the layer (B) are layered with the layer (C) interposed in between, it is possible to inhibit the polyvalent metal ions in the layer (B) from being transferred to the layer (A), and thus to inhibit the formation of ionic bonds (ionic bond reaction) between the polyvalent metal ions and the carboxyl groups of the polycarboxylic acid-based polymer. For this reason, it is possible to store a draw-forming laminated sheet according to the present invention for an extended period of time before the draw-forming.

Moreover, the gas-barrier layer precursor may be a laminated sheet including multiple layers of at least one layer among layers (A), (B) and (C). In this respect, the following will show examples of the layer structure of the gas-barrier layer precursor. It should be noted that these examples are given for the illustrative purpose only, and the gas-barrier layer precursor according to the present invention is not limited to only these.
1 : (A)/(C)/(B),
2 : (A)/(C)/(B)/(C)/(A),
3 : (B) / (C) / (A) / (C) / (B),
4 : (A) / (C) / (B) / (C) / (A) / (C) / (B).

Furthermore, in the gas-barrier layer precursor, the chemical equivalent ratio (Bt/At) of the content (Bt) of the polyvalent metal compound to the content (At) of the carboxyl groups in the polycarboxylic acid-based polymer is preferably 0.2 or more from the viewpoint of the gas-barrier property of a draw-formed container to be obtained. The chemical equivalent ratio (Bt/At) is more preferably within a range of 0.5 to 10. Moreover, the chemical equivalent ratio (Bt/At) is particularly preferably within a range of 0.8 to 5 from the viewpoint of the stretch-formability and the transparency of a laminated sheet to be obtained, in addition to the abovementioned viewpoint.

### <Layer formed from thermoplastic resin>

The layer formed from the thermoplastic resin according to the present invention is disposed on the surface of the gas-barrier layer precursor. Moreover, the layer formed from the thermoplastic resin is disposed appropriately in accordance with purposes such as provisions to a draw-forming laminated sheet with, for example, abrasion-resistance, glossiness, a heat sealing property, strength, moisture proofness, and the like. Additionally, the thermoplastic resin can include the same material as that of the supporting material. Furthermore, the thermoplastic resin can be appropriately selected for use in accordance with the purposes. Note that the draw-forming laminated sheet according to the present invention may include two or more thermoplastic-resin layers in accordance with the purposes.

Moreover, the thickness of the layer formed from the thermoplastic resin is preferably 1 µm to 1000 µm, more preferably 5 µm to 500 µm, particularly preferably 5 µm to 300 µm, and the most preferably 5 µm to 200 µm.

### <Draw-forming laminated sheet>

The draw-forming laminated sheet according to the present invention includes: the above-described supporting material; the above-described gas-barrier layer precursor; and the above-described layer formed from the thermoplastic resin. The draw-forming laminated sheet can be stored for an extended period of time before the draw-forming. Moreover, by performing a sterilization treatment such as a boiling or retort treatment on a container draw-formed from the draw-forming laminated sheet, the draw-formed container has an excellent gas-barrier property even under a high humidity atmosphere. Therefore, the draw-forming laminated sheet according to the present invention is particularly useful as a laminated sheet used for a draw-formed container on which the sterilization treatment such as a boiling or retort treatment needs to be performed.

### <Method of manufacturing draw-forming laminated sheet>

Next, description will be given of a method of manufacturing a draw-forming laminated sheet according to the present invention. The method of manufacturing a draw-forming laminated sheet according to the present invention can include the steps of: preparing coating solutions for forming the anchor coat layer, the layer (A), the layer (B) and the layer (C); coating the supporting material sequentially with the prepared coating solutions and drying after each coating process so that the gas-barrier layer precursor can be formed on at least one surface of the supporting material with the anchor coat layer interposed in between; and forming the layer formed from the thermoplastic resin by layering a thermoplastic resin film on the surface of the gas-barrier layer precursor.

In the step of preparing coating solutions, prepared are the coating solutions for forming the anchor coat layer, the layer (A), the layer (B) and the layer (C). The method of preparing the coating solutions can include a method of dissolving or dispersing the materials for the anchor coat layer, the layer (A), the layer (B) and the layer (C) in a solvent or dispersant. The solvent or dispersant can include, but not limited to, water, methyl alcohol, ethyl alcohol, isopropyl alcohol, n-propyl alcohol, n-butyl alcohol, n-pentyl alcohol, dimethyl sulfoxide, dimethylformamide, dimethylacetamide, toluene, hexane, heptane, cyclohexane, acetone, methyl ethyl ketone, diethyl ether, dioxane, tetrahydrofuran, ethyl acetate, butyl acetate, and the like. Furthermore, the solid content of the coating solutions is preferably 1% by mass to 50% by mass and more preferably 2% by mass to 30% by mass from the viewpoint of the appropriate coating.

In the step of coating with coating solutions and drying, the supporting material is coated sequentially with the prepared coating solutions and dried after each coating process to form the gas-barrier layer precursor on at least one surface of the supporting material with the anchor coat layer interposed in between. More specifically, at least one surface of the supporting material is coated with the coating solution for the anchor coat layer and then dried to form the anchor coat layer. Subsequently, the surface of the anchor coat layer is coated with the coating solution for the layer (A) or (B) and dried to form the layer (A) or (B). Thereafter, the resulting surface of the anchor coat layer is coated with the coating solution for the layer (C) and dried to form the layer (C). After that, when the layer (A) is coated, the coating solution for the layer (B) is coated thereon and dried to form the layer (B). Meanwhile, when the layer (B) is coated, the coating solution for the layer (A) is coated thereon and dried to form the layer (A). Eventually, it is possible to form the gas-barrier layer precursor in which the layer (A) and the layer (B) are layered with the layer (C) interposed in between.

As the method of coating with the coating solutions, a known coating method can be used without particular limitation, and the method includes: an immersion method (dipping method); and a method with use of spray, coater, printer, brush, or the like. The types of coater and printer used in these methods and the coating methods thereof can include a gravure coater, a reverse roll coater, a micro-gravure coater, an air knife coater, a dip coater, a bar coater, a comma coater and a die coater employed in a direct gravure method, a reverse gravure method, a kiss-reverse gravure method and an offset gravure method.

Moreover, the amount of coating solution to be coated varies with a desired thickness of the layer, and thus is not particularly limited. However, the mass per 1 m² after coating with the coating solutions and drying is preferably 0.01 g/m² to 5 g/m², and more preferably 0.03 g/m² to 3 g/m². When the mass per 1 m² after coating with the coating solution and drying is less than the lower limit, the layer tends to be formed insufficiently. In contrast, when the mass exceeds the upper limit, the drying is insufficient, and thus the solvent tends to stay remained.

Furthermore, the method of drying the coating solutions can include, but not limited to, a naturally drying method, a drying method in an oven set at a predetermined temperature, and a drying method with use of a dryer provided to the coater, such as an arch dryer, a floating dryer, a drum dryer and an infrared dryer. Additionally, the drying conditions can be appropriately selected on the basis of the drying method. For example, in the drying method in an oven, it is preferable to dry at a temperature of 60°C to 120°C and approximately for 1 second to 5 minutes.

In the step of forming the layer formed from the thermoplastic resin, a thermoplastic resin film is layered on the surface of the gas-barrier layer precursor formed as described above. The method of layering the thermoplastic resin film is not particularly limited, and a known method can be used appropriately. The method can include a dry lamination method, an extrusion lamination method and a hot-melt lamination method.

### <Draw-formed container>

Next, description will be given of a draw-formed container according to the present invention. The draw-formed container according to the present invention is draw-formed from the above-described draw-forming laminated sheet. Moreover, a draw-formed container with a gas-barrier property according to the present invention is formed by performing a high temperature-high humidity treatment on the draw-formed container, which is draw-formed from the draw-forming laminated sheet, so as to transfer the polyvalent metal ions in the layer (B) to the layer (A) via the layer (C), and thus to form ionic bonds between the polyvalent metal ions and carboxyl groups of the polycarboxylic acid-based polymer.

The high temperature-high humidity treatment refers to a treatment by which the draw-formed container is exposed to a high temperature-high humidity atmosphere or hot water. In the high temperature-high humidity treatment, the treatment temperature is preferably 80°C or more (more preferably 90°C or more). The treatment time varies with the treatment temperature, but is preferably 10 minutes or more (more preferably 20 minutes or more). Furthermore, when the draw-formed container is exposed to the high temperature-high humidity atmosphere, the relative humidity is preferably 90% or more. Not that, as the high temperature-high humidity treatment, a sterilization treatment such as a boiling or retort treatment may be performed on the draw-formed container.

The draw-formed container according to the present invention is provided with a gas-barrier property by such a high temperature-high humidity treatment. At a temperature of 20°C and a relative humidity of 80%, the draw-formed container with a gas-barrier property preferably has an oxygen permeability of 100 cm³ (STP)/(m²·day·MPa) or less, more preferably 50 cm³ (STP)/(m²·day·MPa) or less, and particularly preferably 30 cm³ (STP)/(m²·day·MPa) or less.

Moreover, in a method of manufacturing a draw-formed container with a gas-barrier property according to the present invention, the draw-formed container, which is draw-formed from the draw-forming laminated sheet, is exposed to a high temperature-high humidity atmosphere at a temperature of 80 °C or more and a relative humidity of 90% or more for 10 minutes or longer so that the oxygen permeability of the draw-formed container at a temperature of 20°C and a relative humidity of 80% can be 100 cm³ (STP)/(m²·day·MPa) or less.

Note that, as the treatment to expose the draw-formed container to the high temperature-high humidity atmosphere at a temperature of 80°C or more and a humidity of 90% or more for 10 minutes or longer, a sterilization treatment such as a boiling or retort treatment may be performed on the draw-formed container.

### [Examples]

Hereinafter, the present invention will be more specifically described on the basis of examples and comparative examples. However, the present invention is not limited to the following examples.

### (Preparation Example 1)

A polyester polyol (EL-510-1: made by Toyo-Morton, Ltd., a solid content of 50% by mass) serving as a base material and polyisocyanate (CAT-RT87: made by Toyo-Morton, Ltd., a solid content of 70% by mass) serving as a hardener were dissolved in a solvent (ethyl acetate) with the mass ratio (base material/hardener) of 5/1. Thereby, a coating solution (Ac-1) for the anchor coat layer was prepared. The solid content of the obtained coating solution (Ac-1) was 5% by mass.

### (Preparation Example 2)

A polyester resin (a binder resin for blocking ultraviolet light: made by Sumitomo Osaka Cement Co., Ltd., a solid content of 20% by mass) serving as a base material and polyisocyanate (made by Sumitomo Osaka Cement Co., Ltd., a solid content of 75% by mass) serving as a hardener were mixed so that the mass ratio (base material/hardener) can be 3/1. Then, the mixture was diluted with a mixed solvent of toluene and methyl ethyl ketone (toluene/methyl ethyl ketone = 4/1) so that the solid content can be 5% by mass. Thereby, a coating solution (Ac-2) for the anchor coat layer was prepared.

### (Preparation Example 3)

Firstly, a polyacrylic acid-based polymer (Aron™ A-10H: made by Toagosei CO., LTD., an aqueous solution with 25% by mass) with a number average molecular weight of 200, 000 was diluted with distilled water so that the solid content can be 4% by mass. Thereby, a polyacrylate solution was prepared. Subsequently, 90 mass parts of the obtained polyacrylate solution and 10 mass parts of a 4%-by-mass glycerin solution were mixed and then stirred to prepare a coating solution (A-1) for the layer (A).

### (Preparation Example 4)

Calcium hydroxide with a chemical equivalent of 0.05 relative to the carboxyl group of polyacrylic acid was added to the coating solution (A-1) obtained in Preparation Example 3, and thereby a coating solution (A-2) for the layer (A) was prepared.

### (Preparation Example 5)

A zinc oxide dispersion solution (suspension ZS-303 for blocking ultraviolet light: made by Sumitomo Osaka Cement Co., Ltd., a solid content of 32.4% by mass) and a polyester resin (a binder resin for blocking ultraviolet light: made by Sumitomo Osaka Cement Co., Ltd., a solid content of 20% by mass) were mixed so that the mass ratio of the zinc oxide to the polyester resin (zinc oxide/polyester resin) can be 80/20. Thereby, a mixed solution was obtained. To 100 mass parts of the obtained mixed solution, 3 mass parts of polyisocyanate (made by Sumitomo Osaka Cement Co., Ltd., a solid content of 75% by mass) was added, and then diluted with a mixed solvent of toluene and methyl ethyl ketone (toluene/methyl ethyl ketone = 4/1) so that the solid content can be 15% by mass. Thereby, a coating solution (B-1) for the layer (B) was prepared.

### (Preparation Example 6)

A coating solution (B-2) for the layer (B) was prepared as in the case of Preparation Example 5 except that the zinc oxide and the polyester resin were mixed so that the mass ratio (zinc oxide/polyester resin) can be 85/15.

### (Preparation Example 7)

A coating solution (B-3) for the layer (B) was prepared as in the case of Preparation Example 5 except that the zinc oxide and the polyester resin were mixed so that the mass ratio (zinc oxide/polyester resin) can be 88/12.

### (Preparation Example 8)

As in the case of Preparation Example 1, prepared was a coating solution (C-1) for the layer (C), which had a solid content of 5% by mass.

### (Preparation Example 9)

As in the case of Preparation Example 2, prepared was a coating solution (C-2) for the layer (C), which had a solid content of 5% by mass.

### (Preparation Example 10)

A coating solution (B-4) for the layer (B) was prepared as in the case of Preparation Example 5 except that the zinc oxide and the polyester resin were mixed so that the mass ratio (zinc oxide/polyester resin) can be 74/26.

### (Preparation Example 11)

A coating solution (B-5) for the layer (B) was prepared as in the case of Preparation Example 5 except that the zinc oxide and the polyester resin were mixed so that the mass ratio (zinc oxide/polyester resin) can be 68/32.

### (Preparation Example 12)

A coating solution (B-6) for the layer (B) was prepared as in the case of Preparation Example 5 except that the zinc oxide and the polyester resin were mixed so that the mass ratio (zinc oxide/polyester resin) can be 94/6.

### (Preparation Example 13)

A coating solution (B-7) for the layer (B) was prepared as in the case of Preparation Example 5 except that the zinc oxide and the polyester resin were mixed so that the mass ratio (zinc oxide/polyester resin) can be 62/38.

### (Preparation Example 14)

A polyether polyol (LX-401A: made by DAINIPPON INK AND CHEMICALS, INCORPORATED, a solid content of 60% by mass) serving as a base material and polyisocyanate (SP-60: made by DAINIPPON INK AND CHEMICALS, INCORPORATED, a solid content of 60% by mass) serving as a hardener were dissolved in a solvent (ethyl acetate) so that the mass ratio (base material/hardener) can be 1/1. Thereby, a coating solution (C-3) for the layer (C) was prepared. The solid content of the obtained coating solution (C-3) was 5% by mass.

### (Preparation Example 15)

An acrylic resin (WS-210A: made by DAINIPPON INK AND CHEMICALS, INCORPORATED, a solid content of 50% by mass) serving as a base material and an epoxy resin (LB-60: made by DAINIPPON INK AND CHEMICALS, INCORPORATED, a solid content of 60% by mass) serving as a hardener were dissolved in water so that the mass ratio (base material/hardener) can be 10/1.8. Thereby, a coating solution (C-4) for the layer (C) was prepared. The solid content of the obtained coating solution (C-4) was 5% by mass.

### (Preparation Example 16)

A polyethyleneimine resin (AC-108 conc: made by DAINIPPON INK AND CHEMICALS, INCORPORATED, a solid content of 8% by mass) was dissolved in methanol, and thereby, a coating solution (C-5) for the layer (C) was prepared. The solid content of the obtained coating solution (C-5) was 5% by mass.

### (Example 1)

Firstly, the surface of a nonoriented polyester (PET) film (supporting material) with a thickness of 250 µm was coated with the coating solution (Ac-1) obtained in Preparation Example 1 using a bar coater (K303 PROOFER™; made by RK Print-Coat Instruments Ltd.), and then dried at 70°C for one minute to form an anchor coat layer. The thickness of the obtained anchor coat layer was 0.3 µm.

Next, the surface of the anchor coat layer was coated with the coating solution (A-1) obtained in Preparation Example 3 using the bar coater, and then dried at 70°C for one minute to form a layer (A-1). The thickness of the obtained layer (A-1) was 0.48 µm. Subsequently, the surface of the layer (A-1) was coated with the coating solution (C-1) obtained in Preparation Example 8 using the bar coater, and then dried at 70 °C for one minute to form a layer (C-1). The thickness of the obtained layer (C-1) was 0.15 µm. Thereafter, the surface of the layer (C-1) was coated with the coating solution (B-1) obtained in Preparation Example 5 using the bar coater, and then dried at 70°C for one minute to form a layer (B-1). The thickness of the obtained layer (B-1) was 0.6 µm.

After that, a nonoriented polypropylene (CPP) film with a thickness of 80 µm was adhered on the layer (B-1) by a dry lamination method with a polyurethane adhesion agent [(base material: Takelac A620, hardener: Takenate 65, solvent: ethyl acetate): made by Mitsui Takeda Chemicals, Inc.] interposed in between. Thereby, a draw-forming laminated sheet for was obtained.

### (Example 2)

A draw-forming laminated sheet was obtained as in the case of Example 1 except that the coating solution (C-2) obtained in Preparation Example 9 was used instead of the coating solution (C-1) obtained in Preparation Example 8. Note that the thickness of an obtained layer (C-2) was 0.15 µm.

### (Example 3)

A draw-forming laminated sheet was obtained as in the case of Example 1 except that the coating solution (Ac-2) obtained in Preparation Example 2 was used instead of the coating solution (Ac-1) obtained in Preparation Example 1, and that the coating solution (C-2) obtained in Preparation Example 9 was used instead of the coating solution (C-1) obtained in Preparation Example 8. Note that the thickness of an obtained layer (C-2) was 0.15 µm.

### (Example 4)

A draw-forming laminated sheet was obtained as in the case of Example 1 except that a nonoriented 6-nylon (Ny) film with a thickness of 60 µm was used as the supporting material instead of the nonoriented polyester (PET) film with a thickness of 250 µm, and that a nonoriented polypropylene (CPP) film with a thickness of 150 µm was used instead of the nonoriented polypropylene (CPP) film with a thickness of 80 µm.

### (Example 5)

A draw-forming laminated sheet was obtained as in the case of Example 1 except that a nonoriented polypropylene (CPP) film with a thickness of 150 µm was used as the supporting material instead of the nonoriented polyester (PET) film with a thickness of 250 µm, and that a nonoriented polypropylene (CPP) film with a thickness of 150 µm was used instead of the nonoriented polypropylene (CPP) film with a thickness of 80 µm.

### (Example 6)

A draw-forming laminated sheet was obtained as in the case of Example 1 except that the coating solution (B-2) obtained in Preparation Example 6 was used instead of the coating solution (B-1) obtained in Preparation Example 5. Note that the thickness of an obtained layer (B-2) was 0.6 µm.

### (Example 7)

A draw-forming laminated sheet was obtained as in the case of Example 1 except that the coating solution (B-3) obtained in Preparation Example 7 was used instead of the coating solution (B-1) obtained in Preparation Example 5. Note that the thickness of an obtained layer (B-3) was 0.6 µm.

### (Example 8)

A draw-forming laminated sheet was obtained as in the case of Example 1 except that the coating solution (A-2) obtained in Preparation Example 4 was used instead of the coating solution (A-1) obtained in Preparation Example 3. Note that the thickness of an obtained layer (A-2) was 0.48 µm.

### (Comparative Example 1)

For the purpose of comparison, a draw-forming laminated sheet was obtained as in the case of Example 1 except that a layer (C-1) was not formed.

### (Comparative Example 2)

For the purpose of comparison, a draw-forming laminated sheet was obtained as in the case of Example 4 except that a layer (C-1) was not formed.

### (Example 9)

A draw-forming laminated sheet was obtained as in the case of Example 1 except that the coating solution (C-3) obtained in Preparation Example 14 was used instead of the coating solution (C-1) obtained in Preparation Example 8. Note that the thickness of an obtained layer (C-3) was 0.15 µm.

### (Example 10)

A draw-forming laminated sheet was obtained as in the case of Example 1 except that the coating solution (C-4) obtained in Preparation Example 15 was used instead of the coating solution (C-1) obtained in Preparation Example 8. Note that the thickness of an obtained layer (C-4) was 0.15 µm.

### (Example 11)

A draw-forming laminated sheet was obtained as in the case of Example 1 except that the coating solution (C-5) obtained in Preparation Example 16 was used instead of the coating solution (C-1) obtained in Preparation Example 8. Note that the thickness of an obtained layer (C-5) was 0.15 µm.

### (Example 12)

A draw-forming laminated sheet was obtained as in the case of Example 1 except that the coating solution (C-1) obtained in Preparation Example 8 was coated thereon using a bar coater which has a wet coating amount (wet thickness: 6 µm) different from that of the bar coater used in Example 1. Note that the thickness of an obtained layer (C-1) was 0.3 µm.

### (Example 13)

A draw-forming laminated sheet was obtained as in the case of Example 1 except that the coating solution (C-1) obtained in Preparation Example 8 was coated thereon using a bar coater which has a wet coating amount (wet thickness: 12 µm) different from that of the bar coater used in Example 1. Note that the thickness of an obtained layer (C-1) was 0.6 µm.

### (Example 14)

A draw-forming laminated sheet was obtained as in the case of Example 1 except that the coating solution (B-4) obtained in Preparation Example 10 was used instead of the coating solution (B-1) obtained in Preparation Example 5. Note that the thickness of an obtained layer (B-4) was 0.15 µm.

### (Example 15)

A draw-forming laminated sheet was obtained as in the case of Example 1 except that the coating solution (B-5) obtained in Preparation Example 11 was used instead of the coating solution (B-1) obtained in Preparation Example 5. Note that the thickness of an obtained layer (B-5) was 0.15 µm.

### (Comparative Example 3)

A draw-forming laminated sheet was obtained as in the case of Example 1 except that the coating solution (C-1) obtained in Preparation Example 8 was coated thereon using a bar coater which has a wet coating amount (wet thickness: 24 µm) different from that of the bar Coater used in Example 1. Note that the thickness of an obtained layer (C-1) was 1.2 µm.

### (Comparative Example 4)

A draw-forming laminated sheet was obtained as in the case of Example 1 except that the coating solution (B-6) obtained in Preparation Example 12 was used instead of the coating solution (B-1) obtained in Preparation Example 5. Note that the thickness of an obtained layer (B-6) was 0.15 µm.

### (Comparative Example 5)

A draw-forming laminated sheet was obtained as in the case of Example 1 except that the coating solution (B-7) obtained in Preparation Example 13 was used instead of the coating solution (B-1) obtained in Preparation Example 5. Note that the thickness of an obtained layer (B-7) was 0.15 µm.

### <Electron microscopy observation and oxygen permeability measurement>

### (i) Manufacturing of draw-formed container

Firstly, prepared were a laminated sheet which was obtained by aging each of the draw-forming laminated sheets obtained in Examples 1 to 15 and Comparative Examples 1 to 5 at a temperature of 40 °C for 3 days as well as a laminated sheet which was obtained by storing the laminated sheet after the aging at room temperature for 70 days. Then, each of these laminated sheets was formed to have a diameter ø of 90 mm and a depth of 40 mm using a deep drawn type high speed automatic vacuum pack machine (FV-603: made by Omori Machinery Co., Ltd.) to obtain a draw-formed container.

### (ii) Electron microscopy observation

A particular minute portion of the obtained draw-formed container was observed as a sample with an electron microscopy (TEM-EDX) to measure the thickness of the layer (C) of the sample. Specifically, specimens are cut out from a side surface of the obtained draw-formed container using an ultramicrotome. The cross sections of these specimens were observed with TEM-EDX and by means of a transmission electron microscopy (HF2000: made by Hitachi Ltd.) and an elemental analysis instrument (VOYAGER III M3100: made by Noran Instruments, Inc.) to measure the thickness of the layer (C). Note that the measuring conditions are: an accelerating voltage of 200 keV, a beam diameter of 10 nm, an energy resolution of 137 eV, and a measuring time of 100 seconds. From the result of TEM-EDX, it was seen that the layer (C) with a thickness of 75 nm was formed in each of the draw-formed containers which were draw-formed from the draw-forming laminated sheets obtained in Examples 1 to 11, 14 and 15 as well as Comparative Examples 4 and 5. Moreover, it was seen that the layers (C) with thicknesses of 150 nm and 300 nm were respectively formed in the draw-formed containers which were draw-formed from the draw-forming laminated sheets obtained in Examples 12 and 13. Furthermore, it was seen that the layer (C) with a thickness of 600 nm was formed in the draw-formed container which was draw-formed from the draw-forming laminated sheet obtained in Comparative Example 3.

### (iii) Oxygen permeability measurement

Firstly, a retort treatment (hot water immersion type) as a high temperature-high pressure treatment was performed on the obtained draw-formed containers at a temperature of 120°C for 30 minutes using a retorting apparatus (RCS-60: made by Hisaka Works, Ltd.), and thereby samples were obtained. Then, the oxygen permeability of each obtained sample was measured using an oxygen permeability tester (™OX-TRAN 2/20; made by Modern Control, Inc.) when the atmosphere outside the containers was at a temperature of 20°C and a relative humidity (RH) of 50%, and the atmosphere inside the containers was at a temperature of 20°C and a relative humidity (RH) of 80%. Subsequently, by using the values of the oxygen concentration (20%) in the atmosphere and the surface area of the containers (0.018 m²), the obtained measurement value was converted to calculate the oxygen permeability [unit: cm³ (STP) / (m²·day·MPa) ] at the oxygen concentration of 100% and per surface area of 1 m².

Table 1 shows the results obtained in Examples 1 to 8 and Comparative Examples 1 and 2. Moreover, Table 1 shows supporting materials, orders of coating with coating solutions, thermoplastic resin films, and mass ratios of zinc oxide to polyester resin (zinc oxide/polyester resin) in the layer (B) in Examples 1 to 8 and Comparative Examples 1 and 2. Furthermore, Table 2 shows the results obtained in Examples 9 to 15 and Comparative Examples 3 to 5. Additionally, Table 2 shows supporting materials, orders of coating with coating solutions, thermoplastic resin films, mass ratios of zinc oxide to polyester resin (zinc oxide/polyester resin) in the layer (B), and thickness of layer (C) in Examples 9 to 15 and Comparative Examples 3 to 5.

**[TABLE 1]**

| | Draw-forming laminated sheets | | | | Oxygen permeability [cm³ (STP) / (m² · day · MPa)] | |
|---|---|---|---|---|---|---|
| | Supporting material (thickness: µm) | Orders of coating with coating solutions | Thermoplastic resin films (thickness: µm) | Mass ratios of mixtures in layer (B) *1 | Draw-formed samples immediately after aged | Draw-formed samples after stored for 70 days |
| Example 1 | PET (250) | Ac-1/A-1/c-1/B-1 | CPP (80) | 80/20 | 10 | 10 |
| Example 2 | PET (250) | Ac-1/A-1/C-2/B-1 | CPP (80) | 80/20 | 8 | 8 |
| Example 3 | PET (250) | Ac-2/A-1/C-2/B-1 | CPP (80) | 80/20 | 8 | 8 |
| Example 4 | Ny (60) | Ac-1/A-1/C-1/B-1 | CPP (150) | 80/20 | 12 | 12 |
| Example 5 | CPP (150) | Ac-1/A-1/C-1/B-1 | CPP (150) | 80/20 | 30 | 30 |
| Example 6 | PBT (250) | Ac-1/A-1/c-1/B-2 | CPP (80) | 85/15 | 8 | 8 |
| Example 7 | PET (250) | Ra-1/A-1/C-1/B-3 | CPP (80) | 88/12 | 8 | 8 |
| Example 8 | PET (250) | Ac-1/A-2/c-1/B-1 | CPP (80) | 80/20 | 10 | 10 |
| Comparative Example 1 | PET (250) | Ac-1/A-1/B-1 | CPP (80) | 80/20 | 12 | 200 |
| Comparative Example 2. | Ny (60) | Ac-1/A-1/B-1 | CPP (150) | 80/20 | 15 | 300 |

| | | | | | | |
|---|---|---|---|---|---|---|
| *1: the mass ratios of mixtures indicate the mass ratios of zinc oxide to polyester resin (zinc oxide/polyester resin) in the layer (B). | | | | | | |

**[TABLE 2]**

| | Draw-forming laminated sheets | | | | | Oxygen permeability [cm³ (STP)/(m²·day·MPa)] | |
|---|---|---|---|---|---|---|---|
| | Supporting material (thickness : µm) | Orders of coating with coating solutions | Thermoplastic resin films (thickness: µm) | Mass ratios of mixtures in Layer (B) *2 | Thickness of layer (C) (µm) | Draw-formed samples immediately after aged | Draw-formed samples after stored for 70 days |
| Example 9 | PET (250) | Ac-1/A-1/C-3/B-1 | CPP (80) | 80/20 | 0.15 | 8 | 8 |
| Example 10 | PET (250) | Ac-1/A-1/C-4/B-1 | CPP (80) | 80/20 | 0.15 | 14 | 14 |
| Example 11 | PET (250) | Aa-1/A-1/C-5/B-1 | CPP (80) | 80/20 | 0.15 | 14 | 14 |
| Example 12 | PET (250) | Ac-1/A-1/C-1/B-1 | CPP (80) | 80/20 | 0.30 | 14 | 14 |
| Example 13 | PET (250) | Ac-1/A-1/C-1/B-1 | CPP (80) | 80/20 | 0.60 | 80 | 80 |
| Example 14 | PET (250) | Ac-1/A-1/C-1/B-4 | CPP (80) | 74/26 | 0.15 | 40 | 40 |
| Example 15 | PET (250) | Ac-1/A-1/C-1/B-5 | CPP (80) | 68/32 | 0.15 | 80 | 80 |
| Comparative Example 3 | PET (250) | AC-1/A-1/C-1/B-1 | CPP (80) | 80/20 | 1.20 | 200 | 200 |
| Comparative Example 4 | PET (250) | Ac-1/A-1/C-1/B-6 | CPP (80) | 94/6 | 0.15 | A crack occurred *3 | A crack occurred *3 |
| Comparative Example 5 | PET (250) | Aa-1/A-1/C-1/B-7 | CPP (80) | 62/38 | 0.15 | 160 | 160 |

| | | | | | | | |
|---|---|---|---|---|---|---|---|
| *2: the mass ratios of mixtures indicate the mass ratios of zinc oxide to polyester resin (zinc oxide/polyester resin) in the layer (B). *3: indicating that significant oxygen permeability was not measured because the crack occurred in the layer (B). | | | | | | | |

As apparent from the results shown in Tables 1 and 2, it was confirmed that the draw-forming laminated sheets according to the present invention (Examples 1 to 15) allowed to obtain the draw-formed containers with an excellent gas-barrier property even under a high humidity atmosphere. Moreover, it was confirmed that the draw-forming laminated sheets according to the present invention (Examples 1 to 15) allowed to obtain the draw-formed containers with an excellent gas-barrier property even under a high humidity atmosphere, when the draw-forming laminated sheets were draw-formed after stored for an extended period of time such as 70 days.

As described hereinabove, the present invention makes it possible to provide a draw-forming laminated sheet which can be formed into a draw-formed container with an excellent gas-barrier property even under a high humidity atmosphere. Moreover, the draw-forming laminated sheet can be stored for an extended period of time before the draw-forming as well as to provide a draw-formed container using the draw-forming laminated sheet.

## Claims

1. A draw-forming laminated sheet, comprising:
a nonoriented supporting material;
a gas-barrier layer precursor, which is layered on at least one surface of the supporting material with an anchor coat layer interposed in between; and
a layer formed from a thermoplastic resin, which is disposed on the surface of the gas-barrier layer precursor, wherein
the gas-barrier layer precursor includes: a layer (A) formed from a mixture of a polycarboxylic acid-based polymer and a plasticizer; a layer (B) formed from a mixture of a polyvalent metal compound and a binder resin; and a layer (C) which is formed from an ionization-control resin, and which has a thickness of 0.01 µm to 1 µm, and
the layer (A) and the layer (B) are layered with the layer (C) interposed in between.

2. The draw-forming laminated sheet according to claim 1, wherein the ionization-control resin is at least one resin selected from the group consisting of a polyester-based resin, a polyether-based resin, an epoxy-based resin, an acrylic-based resin and a polyethyleneimine-based resin.

3. The draw-forming laminated sheet according to claim 1, wherein the ionization-control resin is a resin having a urethane bond.

4. The draw-forming laminated sheet according to claim 1, wherein the ionization-control resin is the same as the resin which forms the anchor coat layer.

5. The draw-forming laminated sheet according to claim 1, wherein the ionization-control resin is the same as the binder resin which forms the layer (B').

6. The draw-forming laminated sheet according to claim 1, wherein the ionization-control resin is the same as the resin which forms the anchor coat layer and also as the binder resin which forms the layer (B).

7. The draw-forming laminated sheet according to claim 1, wherein the mass ratio of the polyvalent metal compound to the binder resin (polyvalent metal compound/binder resin) is within a range of 65/35 to 92/8.

8. The draw-forming laminated sheet according to claim 1, wherein the polyvalent metal compound is a divalent metal compound.

9. A draw-formed container, draw-formed from the draw-forming laminated sheet according to any one of claims 1 to 8.

10. A draw-formed container with a gas-barrier property, formed by performing a high temperature-high humidity treatment on a draw-formed container, which is draw-formed from the draw-forming laminated sheet according to any one of claims 1 to 8, so as to transfer polyvalent metal ions in the layer (B) to the layer (A) via the layer (C), and thus to form ionic bonds between the polyvalent metal ions and carboxyl groups of the polycarboxylic acid-based polymer.

11. The draw-formed container with a gas-barrier property according to claim 10, wherein the oxygen permeability at a temperature of 20°C and a relative humidity of 80% is 100 cm³ (STP)/ (m²·day·MPa) or less.

12. A method of manufacturing a draw-formed container with a gas-barrier property, comprising a step of
exposing a draw-formed container, which is draw-formed from the draw-forming laminated sheet according to any one of claims 1 to 8, to a high temperature-high humidity atmosphere at a temperature of 80°C or more and a relative humidity of 90% or more for 10 minutes or longer so that the oxygen permeability of the draw-formed container at a temperature of 20°C and a relative humidity of 80% can be 100 cm³ (STP) / (m²·day·MPa) or less.

## Patentansprüche

1. Zuggeformtes laminiertes Blatt, das folgendes umfasst:
ein nicht-orientiertes Trägermaterial;
einen Gasbarriereschichtvorläufer, der auf mindestens einer Oberfläche des Trägermaterials mit einer dazwischenliegenden Ankerbeschichtung aufgetragen ist; und
eine aus einem thermoplastischen Harz gebildete Schicht, die auf der Oberfläche des Gasbarriereschichtvorläufers angeordnet ist,
wobei der Gasbarriereschichtvorläufer folgendes einschließt:
eine Schicht (A), die aus einer Mischung aus einem polycarboxylsäurebasierten Polymer und einem Weichmacher gebildet ist; eine Schicht (B), die aus einer Mischung aus einer polyvalenten Metallverbindung und einem Binderharz gebildet ist; und eine Schicht (C), die aus einem ionisationskontrollierten Harz gebildet ist und die eine Dicke von 0,01 µm bis 1 µm aufweist, und
die Schicht (A) und die Schicht (B) mit der dazwischenliegenden Schicht (C) aufgetragen sind.

2. Zuggeformtes laminiertes Blatt gemäß Anspruch 1, wobei das ionisationskontrollierte Harz mindestens eines ist, das ausgewählt ist aus einem polyesterbasierten Harz, einem polyetherbasierten Harz, einem epoxybasierten Harz, einem acrylbasierten Harz und einem polyethyleniminbasierten Harz.

3. Zuggeformtes laminiertes Blatt gemäß Anspruch 1, wobei das ionisationskontrollierte Harz ein Harz ist, das eine Urethanbindung aufweist.

4. Zuggeformtes laminiertes Blatt gemäß Anspruch 1, wobei das ionisationskontrollierte Harz dasselbe ist wie das Harz, das die Ankerbeschichtung bildet.

5. Zuggeformtes laminiertes Blatt gemäß Anspruch 1, wobei das ionisationskontrollierte Harz dasselbe ist, wie das Binderharz, das die Schicht (B) bildet.

6. Zuggeformtes laminiertes Blatt gemäß Anspruch 1, wobei das ionisationskontrollierte Harz dasselbe ist, wie das Harz, das die Ankerbeschichtung bildet und ebenso wie das Harz, welches das Binderharz ist, das die Schicht (B) bildet.

7. Zuggeformtes laminiertes Blatt gemäß Anspruch 1, wobei das Massenverhältnis der polyvalenten Metallverbindung zu dem Binderharz (polyvalente Metallverbindung/Binderharz) innerhalb eines Bereiches von 65/35 bis 92/8 ist.

8. Zuggeformtes laminiertes Blatt gemäß Anspruch 1, wobei die polyvalente Metallverbindung eine divalente Metallverbindung ist.

9. Zuggeformter Container, der aus dem zugegeformten laminierten Blatt gemäß irgendeinem der Ansprüche 1 bis 8 zugegeformt ist.

10. Zuggeformter Container mit einer Gasbarriereeigenschaft, der durch Ausführen von einer Hochtemperatur-Hochluftfeuchtigkeitsbehandlung eines zugegeformten Containers gebildet ist, wobei der zugegeformte Container aus dem zugegeformten laminierten Blatt gemäß irgendeinem der Ansprüche 1 bis 8 zuggeformt ist, wobei polyvalente Metallionen in der Schicht (B) über die Schicht (C) zur Schicht (A) übertragen werden, wodurch ionische Bindungen zwischen den polyvalenten Metallionen und den Carboxylgruppen des polycarboxylsäurebasierten Polymers gebildet werden.

11. Zuggeformter Container mit einer Gasbarriereeigenschaft gemäß Anspruch 10, wobei die Sauerstoffdurchlässigkeit bei einer Temperatur von 20°C und einer relativen Luftfeuchtigkeit von 80 % 100 cm³ (STP)/(m²·Tag·MPa) oder weniger ist.

12. Verfahren zur Herstellung eines zuggeformten Containers mit einer Gasbarriereeigenschaft, wobei das Verfahren einen Schritt des
Aussetzen eines zuggeformten Containers, der aus dem zuggeformten laminierten Blatt gemäß irgendeinem der Ansprüche 1 bis 8 zuggeformt ist, einer Hochtemperatur-Hochluftfeuchtigkeitsatmosphäre bei einer Temperatur von 80°C oder mehr und einer relativen Luftfeuchtigkeit von 90 % oder mehr über 10 Minuten oder länger umfasst, so dass die Sauerstoffdurchlässigkeit des zuggeformten Containers bei einer Temperatur von 20°C und einer relativen Luftfeuchtigkeit von 80 % 100 cm³ (STP)/(m²·Tag·MPa) oder weniger sein kann.

## Revendications

1. Feuille stratifiée pour formation par étirage, comprenant :
une matière de support non orientée ;
un précurseur de couche de barrière contre des gaz, qui est feuilleté sur au moins une surface de la matière de support, une couche de revêtement d'ancrage étant interposée au milieu ; et
une couche formée à partir d'une résine thermoplastique, qui est disposée sur la surface du précurseur de couche de barrière contre des gaz, dans laquelle
le précurseur de couche de barrière contre des gaz inclut : une couche (A) formée à partir d'un mélange d'un polymère à base d'acide polycarboxylique et d'un plastifiant ; une couche (B) formée à partir d'un mélange d'un composé de métal polyvalent et d'une résine de liant ; et une couche (C) qui est formée à partir d'une résine de commande d'ionisation, et qui a une épaisseur de 0,01 µm à 1 µm, et
la couche (A) et la couche (B) sont feuilletées, la couche (C) étant interposée au milieu.

2. Feuille stratifiée pour formation par étirage selon la revendication 1, dans laquelle la résine de commande d'ionisation est au moins une résine sélectionnée à partir du groupe constitué par une résine à base de polyester, une résine à base de polyéther, une résine à base d'époxyde, une résine acrylique et une résine à base de polyéthylèneimine.

3. Feuille stratifiée pour formation par étirage selon la revendication 1, dans laquelle la résine de commande d'ionisation est une résine ayant une liaison uréthanne.

4. Feuille stratifiée pour formation par étirage selon la revendication 1, dans laquelle la résine de commande d'ionisation est la même que la résine qui forme la couche de revêtement d'ancrage.

5. Feuille stratifiée pour formation par étirage selon la revendication 1, dans laquelle la résine de commande d'ionisation est la même que la résine de liant qui forme la couche (B).

6. Feuille stratifiée pour formation par étirage selon la revendication 1, dans laquelle la résine de commande d'ionisation est la même que la résine qui forme la couche de revêtement d'ancrage et également que la résine de liant qui forme la couche (B).

7. Feuille stratifiée pour formation par étirage selon la revendication 1, dans laquelle le rapport de masse du composé de métal polyvalent sur la résine de liant (composé de métal polyvalent / résine de liant) est dans une plage de 65 / 35 à 92 / 8.

8. Feuille stratifiée pour formation par étirage selon la revendication 1, dans laquelle le composé de métal polyvalent est un composé de métal divalent.

9. Conteneur formé par étirage, formé par étirage à partir de la feuille stratifiée pour formation par étirage selon l'une quelconque des revendications 1 à 8.

10. Conteneur formé par étirage avec une propriété de barrière contre des gaz, formé en effectuant un traitement à humidité élevée - température élevée sur un conteneur formé par étirage, qui est formé par étirage à partir de la feuille stratifiée pour formation par étirage selon l'une quelconque des revendications 1 à 8, de façon à transférer des ions de métal polyvalent de la couche (B) vers la couche (A) par l'intermédiaire de la couche (C), et pour former ainsi des liaisons ioniques entre les ions de métal polyvalent et des groupes carboxyle du polymère à base d'acide polycarboxylique.

11. Conteneur formé par étirage avec une propriété de barrière contre des gaz selon la revendication 10, dans lequel la perméabilité à l'oxygène à une température de 20 °C et à une humidité relative de 80 % est de 100 cm³ (STP) / (m²·jour·MPa) ou moins.

12. Procédé de fabrication d'un conteneur formé par étirage avec une propriété de barrière contre des gaz, comprenant une étape
d'exposition d'un conteneur formé par étirage, qui est formé par étirage à partir de la feuille stratifiée pour formation par étirage selon l'une quelconque des revendications 1 à 8, dans une atmosphère à humidité élevée - température élevée, à une température de 80 °C ou plus et à une humidité relative de 90 % ou plus pendant 10 minutes ou plus de sorte que la perméabilité à l'oxygène du conteneur formé par étirage à une température de 20 °C et à une humidité relative de 80 % peut être de 100 cm³ (STP) / (m²·jour·MPa) ou moins.
